# EUROPÄISCHE PATENTANMELDUNG

(11) **EP 0 684 125 A2**
(43) Veröffentlichungstag der Anmeldung: **29.11.1995**
(21) Anmeldenummer: 95107421.0
(22) Anmeldetag: 16.05.1995
(51) Int. Cl.: B29C 67/24, B29C 67/20

(54) **Verfahren zur Herstellung von Formkörpern aus Zweikomponenten-Reaktivsystemen mit hohem Füllstoffgehalt**

(30) Priorität: 27.05.1994 DE 4418506
(71) Anmelder: BAYER AG, 51368 Leverkusen (DE)
(72) Erfinder: Klier, Lothar, Dipl. Ing., D-40764 Langenfeld (DE); Gross, Thomas, D-42929 Wermelskirchen (DE); Kreuer, Karl-Dieter, D-51371 Leverkusen (DE); Symannek, Achim, D-42799 Leichlingen (DE)

(57) **Zusammenfassung**

Es wird ein Verfahren zur Herstellung von gegebenenfalls zelligen Polyurethan-Formkörpern mit hohem Mahlgut/Füllstoff-Gehalt beschrieben, welches dadurch gekennzeichnet ist, daß:
1. ein aromatisches Di- oder Polyisocyanat mit einer zur vollständigen Abreaktion aller NCO-Gruppen ungenügenden Menge eines Di-und/oder Polyols des Molekulargewichtes 1000 bis 20 000 vermischt und unter Bildung eines Isocyanat-Voradduktes mit dem Isocyanatgehalt von 5 bis 32 % zur Reaktion gebracht wird,
2. daß dann dieses Isocyanat-Voraddukt mit Mahlgut/Füllstoff vermischt wird, und daß
3. die erhaltene Mischung in einem weiteren Schritt mit einer weiteren Menge eines Di-und/oder Polyols mit einem Molekulargewicht von 62 bis 2000 (Vernetzer) und gegebenenfalls Wasser und/oder organischem Treibmittel unter Verwendung eines statischen Mischorganes in eine Form eingetragen oder kontinuierlich zu Gußprofilen verarbeitet wird.

## Beschreibung

Das Verfahren betrifft die Herstellung Von Formkörpern im Gießpreßverfahren, wobei ein unter Druck fließfähiges Gemisch aus einem pulverförmigen Mahlgut und einem reaktionsfähigen Zweikomponenten-Binder, insbesondere Polyurethan-Binder, in Preßwerkzeugen zu Formteilen verarbeitet wird. Dabei soll als Pulverförmiges Mahlgut Kunststoff-Recycling-Material eingesetzt werden, insbesondere gemahlener Polyurethan-Abfallschaum, Altbauteile aus PUR-Verbundwerkstoffen, insbesondere ohne vorherige stoffliche Trennung der verschiedenen Verbundmaterialien, gegebenenfalls andere gemahlene Kunststoffe, ferner gegebenenfalls in Verbindung mit anorganischen Füllstoffen.

Die vorliegende Erfindung bezieht sich insbesondere auf Zweikomponenten-Polyurethan-Binder-Systeme und die der vorliegenden Erfindung zugrundeliegenden Untersuchungen wurden insbesondere an diesen Systemen durchgeführt; jedoch sind die verfahrenstechnischen Merkmale der vorliegenden Erfindung auch auf andere Zweikomponenten-Binder-Systeme anwendbar.

Gemäß FR-A-1 295 213 und US-A-3 549 472 wurde bereits vorgeschlagen, gemahlenen bzw. zerkleinerten Polyurethan-Schaum mit einem Polyurethan-Reaktivgemisch als Binder wiederzuverwerten. Allerdings führt die konventionelle Herstellung des Binder-Mahlgut-Gemisches zu einem störenden Polymeraufbau in den Misch- und Förderorganen. Die nötigen Reinigungsvorgänge bedingen Betriebsunterbrechungen und erfordern den Einsatz von Lösungsmitteln, die abgesehen von deren arbeitshygienischer Bedenklichkeit auch aufwendig entsorgt werden müssen. Die genannten Vorschläge haben daher keinen Eingang in die Technik gefunden, insbesondere da nach den genannten Vorschlägen nur eine geringe Recyclingquote erzielbar war, d.h., es konnte nur ein geringer Anteil an Recycling-Mahlgut im Fertigteil realisiert werden.

Die Aufgabe der vorliegenden Erfindung bestand nun darin, einerseits eine möglichst hohe Recyclingquote im Fertigteil zu ermöglichen und andererseits einen Polymeraufbau in den Misch-und Förderorganen zu verhindern, so daß Betriebsunterbrechungen aufgrund aufwendiger Reinigungsvorgänge vermieden werden.

Die Erfindung geht nun von dem Grundgedanken aus, zunächst nur eine der Reaktivkomponenten des Reaktivgemisches mit dem Mahlgut bzw. Füllstoff zu beladen, da zur Füllstoff-Beladung regelmäßig nur schwer zu reinigende dynamische Mischaggregate eingesetzt werden müssen, und in einem zweiten Schritt die zweite Reaktivkomponente des Reaktivgemisches der Füllstoff-beladenen ersten Komponente zuzumischen, wobei für diese weitere Vermischung möglichst leicht zu reinigende bzw. selbstreinigende oder leicht austauschbare Mischaggregate eingesetzt werden sollten.

Zur Gewährleistung einer noch fließfähigen Viskosität bei hoher Mahlgut/Füllstoff-Beladung mußte daher die erste Reaktivkomponente so ausgewählt werden, daß diese mengenmäßig die zweite Reaktivkomponente erheblich übersteigt. Erfindungsgemäß wird daher als erste Reaktivkomponente ein Voraddukt der Reaktivkomponenten, insbesondere ein Isocyanat-Prepolymer eingesetzt, d.h. ein Umsetzungsprodukt eines aromatischen Di- oder Polyisocyanates mit einer zur vollständigen Abreaktion aller NCO-Gruppen ungenügenden Menge eines Di- und/oder Polyols.

Für die Weitervermischung des hochviskosen, pastösen Prepolymer-Mahlgut-Ge misches mit Viskositäten bis zu 150 000 mPa.s standen nun die in der Polyurethan-Technologie etablierten hochwirksamen Mischtechnologien wie HochdruckGegenstrom-Injektionstechnologie und Niederdrucktechnologie (siehe Kunststoff-Handbuch Band 7, 1993, Seiten 144 und 145) nicht mehr zur Verfügung.

Überraschenderweise wurde jedoch gefunden, daß durch Einsatz einfacher statischer Mischelemente noch eine hinreichend homogene Vermischung der mit Mahlgut/Füllstoff vorvermischten Reaktivkomponente mit der anderen Reaktivkomponente stattfindet. Solche Statik-Mischelemente sind als Kenics-Mischer bekannt. Diese können als Einweg-Statikmischer aus Kunststoff eingesetzt werden und benötigen keinen Reinigungsaufwand, da sie im Falle eines Polymeraufbaus, d.h. bei sich abzeichnender Verstopfung des Mischelementes, ohne weiteres auf einfache Weise ausgetauscht werden können. Solche Einweg-Statikmischer aus Kunststoff sind von Firma Statomix, durch Firma Keller-Prozeßtechnik, Rot-Kreuz (Schweiz) mit Polyoxymethylen (POM)-Mischelementen und Polypropylen (PP)-Gehäuse verfügbar.

Gegenstand der vorliegenden Erfindung ist demgemäß ein Verfahren zur Herstellung von gegebenenfalls zelligen Formkörpern, das dadurch gekennzeichnet ist, daß
1. zuerst ein aromatisches Di- oder Polyisocyanat mit einer zur vollständigen Abreaktion aller NCO-Gruppen ungenügenden Menge eines Di-und/oder Polyols, des Molekulargewichtes 1000 bis 20 000 vermischt und unter Bildung eines Isocyanat-Voradduktes mit einem NCO-Gruppengehalt 5 bis 32 % zur Reaktion gebracht wird,
2. daß dann dieses Isocyanat-Voraddukt mit dem Mahlgut und/oder Füllstoff vermischt wird, und daß
3. die erhaltene Mischung in einem weiteren Schritt mit einer weiteren Menge einer Komponente eines Di- und/oder Polyols mit einem Molekulargewicht von 62 bis 2000 (Vernetzer), die gegebenenfalls Wasser und/oder organische Treibmittel enthält, unter Verwendung eines statischen Mischorgans in eine Form eingetragen oder kontinuierlich zu Gußprofilen verarbeitet wird.

Die Dosierung der Komponenten im Schritt 3 erfolgt dabei derart, daß die Isocyanat-Kennzahl 70 bis 800 beträgt.

Erfindungsgemäß bevorzugt wird
1. zuerst ein aromatisches Di- oder Polyisocyanat mit einer zur vollständigen Abreaktion aller NCO-Gruppen ungenügenden Menge eines Di-und/oder Polyols des Molekulargewichtes 1000 bis 20 000 vermischt und unter Bildung eines Isocyanat-Voradduktes mit dem Isocyanatgehalt von 12 bis 32 % zur Reaktion gebracht,
2. dann dieses Isocyanat-Voraddukt mit dem Mahlgut/Füllstoff vermischt, wobei der Anteil Mahlgut/Füllstoff an dem Gemisch 5 bis 95 % beträgt, und
3. die erhaltene Mischung in einem weiteren Schritt mit einer weiteren Menge eines Di-und/oder Polyols mit einem Molekulargewicht von 62 bis 2000 (Vernetzer) im Kennzahlbereich 100 bis 350 unter Verwendung eines statischen Mischorganes in eine Form eingetragen.

Für die Herstellung der erfindungsgemäßen Formkörper werden als Ausgangssubstanzen eingesetzt:
Aromatische Polyisocyanate, wie sie z.B. von W. Siefken in Justus Liebigs Annalen der Chemie, 562, Seiten 75 bis 136, beschrieben werden, beispielsweise solche der Formel

### Q(NCO)n

in der
n 2 bis 4, vorzugsweise 2, und
Q einen aromatischen Kohlenwasserstoffrest mit 6 bis 15, vorzugsweise 6 bis 13, C-Atomen.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere modifizierte Polyisocyanate, die sich vom 2,4- und 2,6-Toluylendiisocyanat bzw. vom 4,4'- und/oder 2,4'-Diphenylmethandiisocyanat ableiten.

Ausgangskomponenten sind für die Prepolymerkomponente ferner Verbindungen mit mindestens zwei gegenüber Isocyanaten reaktionsfähigen Wasserstoffatomen und einem Molekulargewicht in der Regel von 62 bis 20 000. Hierunter versteht man neben Aminogruppen, Thiolgruppen oder Carboxylgruppen aufweisenden Verbindungen vorzugsweise Hydroxylgruppen aufweisende Verbindungen, vorzugsweise Polyether, Polyester, Polycarbonate, Polylactone und Polyamide, insbesondere 2 bis 8 Hydroxylgruppen aufweisende Verbindungen, speziell solche vom Molekulargewicht' 1000 bis 20 000, z.B. derartige, mindestens 2, in der Regel 2 bis 8, vorzugsweise 2 bis 4, Hydroxylgruppen aufweisende Verbindungen, wie sie für die Herstellung von homogenen und von zellförmigen Polyurethanen an sich bekannt sind und wie sie z.B. in der DE-OS 28 32 253, Seiten 11 bis 18, beschrieben werden. Auch Gemische verschiedener derartiger Verbindungen kommen erfindungsgemäß in Frage.

Die in Verfahrensschritt 3. verwendeten Vernetzer-Komponenten sind ebenfalls Verbindungen mit mindestens zwei gegenüber Isocyanaten reaktionsfähigen Wasserstoffatomen und einem Molekulargewicht von 62 bis 2000. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19 bis 20, beschrieben.

Gegebenenfalls mitverwendet werden an sich bekannte Hilfs- und Zusatzstoffe, wie Emulgatoren, Reaktionsverzögerer, Stabilisatoren, flammhemmende Substanzen, Weichmacher, Farbstoffe sowie fungistatisch und bakteriostatisch wirksame Substanzen. Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Als Mahlgut können feste, ausreagierte, pulverförmig zerkleinerte massive und/oder geschäumte Polyurethan-, Polyurethan-Hamstoff- und/oder Polyharnstoff-Kunststoffe, die gegebenenfalls Füll-und/oder Verstärkungsmaterialien enthalten können, oder Verbundwerkstoffe wie Armaturentafeln oder Kabelschrott eingesetzt werden. Solche Kunststoffe fallen bei einer Vielzahl von industriellen Prozessen an, wie sie z.B. zur Herstellung von Autozubehörartikeln, Matratzen- oder Möbelschaumartikeln, Folienhinterschäumungen durchgeführt werden und wie sie dem Fachmann vertraut sind.

Als Füllstoffe können weitere feste organische und/oder anorganische und/oder natürliche hochmolekulare Stoffe eingesetzt werden Diese Stoffe können entweder als reine neue Komponente hinzugegeben werden, können aber auch als Verbund nach Mahlung ohne stoffliche Trennung eingesetzt werden. Typische Beispiele für solche Verbunde sind Autoarmaturentafeln, Konsolen, generell Polyurethan-hinterschäumte Folien, Gewebe, Textilien, Gewirke, Geflechte etc.. Beispiele für C) sind organische Polymere wie thermoplastische Polyurethane, ABS und andere Dien-Co- und Terpolymerisate, ABS/PVC-Mischungen, PVC etc., organische Naturprodukte wie Holz, Baumwolle, Stroh usw. als auch anorganische kugelförmige, plättchenförmige oder faserförmige Stoffe wie z.B. Glasfasern, Glasflakes, Mica.

Die Korngröße des Mahlgutes/Füllstoffs soll betragen 0,01 bis 10 mm, in einer bevorzugten Ausführungsform 0,1 bis 9 mm, in einer besonders bevorzugten Ausführungsform 0,2 bis 5 mm und in einer ganz besonders bevorzugten Ausführungsform 0,2 bis 2 mm.

Als organische Treibmittel können niedermolekulare Paraffine mit einem bis 6 Kohlenstoffatomen sowie deren teilweise oder komplett fluorierte und/oder chlorierte Repräsentanten eingesetzt werden. Treibmittel können entweder mit dem Prepolymer oder dem Vernetzer vorvermischt werden.

Für die Herstellung des Prepolymers und die Einmischung des Mahlgutes/Füllstoffs können handelsübliche Mischaggregate wie z.B. Mischschnekken, Stachelrührer, Propellerrührer, Wendelrührer und anderen Rührern, Knetern, etc. eingesetzt werden. Im Prinzip können Prepolymerherstellung und dessen Vermischung mit dem Mahlgut/Füllstoff in einem einzigen Mischaggregat gleichzeitig durchgeführt werden. Bevorzugt erfolgt die Einmischung des Mahlgutes/Füllstoffes getrennt in einer Mischschnecke.

Das homogene Gemisch aus dem Isocyanat-Voraddukt und Mahlgut/Füllstoff stellt in der Regel eine hochviskose oder pastenartige Zubereitung dar. Zur Förderung und Dosierung kommen Maschinen wie z.B. Kolbenpumpen, Zahnradpumpen, Drehkolbenpumpen, Excenterschneckenpumpen, Membranpumpen, Schlauchpumpen oder andere, dem Fachmann allgemein bekannte Förderorgane für hochviskose Medien, in Betracht. Die weitere Vermischung mit der zusätzlichen Vernetzerkomponente und Austrag in ein geeignetes Werkzeug wird erfindungsgemäß mit einem Statikmischer vorgenommen. Geeignete Statikmischer sind z.B. Sulzer-, Kenics-Mischer oder andere Mischer, die nach dem Prinzip: "Teilen, Wenden, Zusammenführen" arbeiten, und dem Fachmann allgemein bekannt sind.

Vorteilhaft sind insbesondere die hohen erzielbaren Recyclingquoten. So kann der neue Formkörper im Prinzip bis zu 95 % zerkleinerten Altmaterials enthalten. Je nach Anforderungen an die herzustellenden Produkte (mechanische Eigenschaften) liegen technisch sinnvolle Recyclingquoten bei 40 bis 60 Gew.-%.

Die erfindungsgemäß hergestellte Reaktivmischung eignet sich sowohl für die kontinuierliche Herstellung von PUR-Elastomeren durch Gießen, die kontinuierliche Blockschaumherstellung, die kontinuierliche Herstellung von gegebenenfalls kaschierter Plattenware und die intermittierende Herstellung von geschäumten oder massiven Formartikeln.

Für den Fall, daß zellige Formkörper hergestellt werden sollen, kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 31 78 490 und 31 82 104 bekannt.

Es können aber auch gegebenenfalls zellige Profile aus dem Reaktionsgemisch durch Gießen hergestellt werden.

Die Produkte des vorliegenden Verfahrens können in verschiedenen Anwendungen eingesetzt werden wie z.B. 2- und/oder 3-dimensionale Formteile, wie z.B. im Kfz-Bereich als kaschierfähige Verkleidungsteile oder Abdeckungen, Türinnenverkleidungen, Konsolenträger, Armaturentafelträger, Luftleitkanäle, Kabelabdeckungen und Kabelkanäle, Kofferraumauskleidungen und andere Anwendungen. Aus dem Nichtautomobilbereich kommen Gehäuse und Gehäusedecken, Paletten, Kleinlastträger, Abdeckungen usw. in Betracht.

Im Rahmen der weiteren Bearbeitung des erfindungsgemäßen Verfahrens hat es sich insbesondere bei der intermittierenden Herstellung von Formteilen, bei denen jeweils aus dem Statikmischer eine Form gefüllt wird und danach der Fluß der Reaktivmischung unterbrochen wird, gezeigt, daß die intermittierende Herstellung eines Prepolymer-Mahlgut/FüllstoffGemisches mit gleichmäßig Mahlgut/Füllstoff-Gehalt nicht regelmäßig gewährleistet werden kann. Der intermittierende Betrieb des Mischaggregates für die Vermischung des Prepolymers mit dem Mahlgut/Füllstoff führt zu Abweichungen im Mahlgut/Füllstoff-Gehalt zu Beginn und Ende der jeweiligen Betriebsphase ("Schuß"). Ferner treten Druckschwankungen am Mischkopf-Einlaß des statischen Mischers insbesondere zu Beginn eines jeden Schusses auf, so daß Dosierungsabweichungen in den beiden Reaktivkomponenten auftreten, so daß das Formteil aufgrund von Schwankungen in der Isocyanat-Kennzahl Schwankungen in den mechanischen Eigenschaften aufweist.

Erfindungsgemäß wird daher weiter vorgeschlagen, das Mischaggregat für die Vermischung von Prepolymer und Mahlgut/Füllstoff kontinuierlich zu betreiben und zwischen dem kontinuierlich betriebenen Mischaggregat und dem intermittierend betriebenen Statikmischer einen Kolbenspeicher vorzusehen, in den aus dem Mischaggregat mit einem Förderaggregat gefördert wird und der hydraulisch bei konstantem Innendruck gehalten wird. Gegenstand der vorliegenden Erfindung ist demnach auch eine Vorrichtung zur Herstellung von Formkörpern aus Zweikomponenten-Reaktivsystemen mit hohem Füllstoffgehalt, bestehend aus einem kontinuierlich betriebenen Mischaggregat zur Vermischung eines Reaktivsystem-Voradduktes mit dem Füllstoff, einem Förderaggregat zur Förderung der Mischung in einen Kolbenspeicher, wobei die Mischung im Kolbenspeicher unter konstantem Druck gehalten wird, und einem intermittierend betriebenen statischen Mischer, in dem die Voraddukt/Füllstoff-Mischung mit einer Vernetzerkomponente vermischt wird.

Weitere Einzelheiten des erfindungsgemäßen Verfahrens und der erfindungsgemäßen Vorrichtung ergeben sich aus den beigefügten Figuren:
Fig. 1 zeigt eine erste erfindungsgemäße Vorrichtung, die insbesondere für kontinuierliche Gießverfahren geeignet ist.
Fig. 2 zeigt eine bevorzugte erfindungsgemäße Vorrichtung für einen intermittierenden Formgebungsprozeß bei kontinuierlich betriebener Mischschnecke.

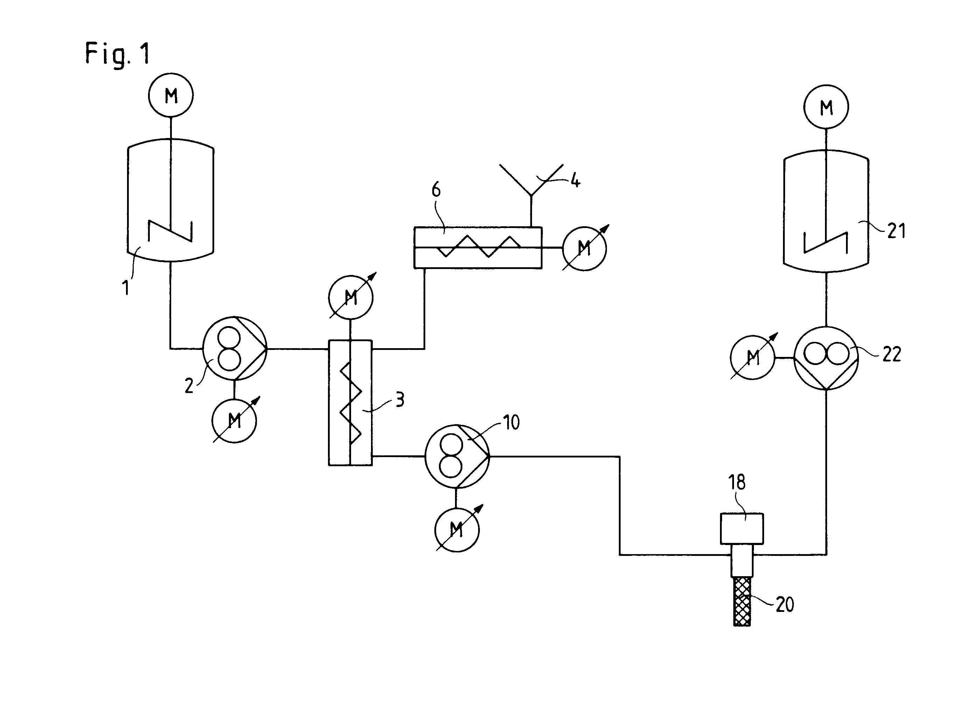

Die schematische Darstellung gemäß Figur 1 zeigt die Mischschnecke 3, in die aus dem Behälter 1 mittels Dosierpumpe 2 das Prepolymer und aus dem Silo 4 mittels Dosierschnecke 6 das Mahlgut dosiert werden. Das aus der Mischschnecke 3 austretende Prepolymer/Mahlgut-Gemisch wird mittels Pumpe 10 zum Mischkopf 19 gefördert. Aus dem Vorratsbehälter 21 für den Vernetzer wird dieser mittels Dosierpumpe 22, die elektronisch mit der Dosierpumpe 2 gekoppelt ist, zum Mischkopf 19 gefördert. Bei geöffneten Mischkopf-Ventilen wird die Mischung durch den Statikmischer 20 gedrückt und dort vermischt.

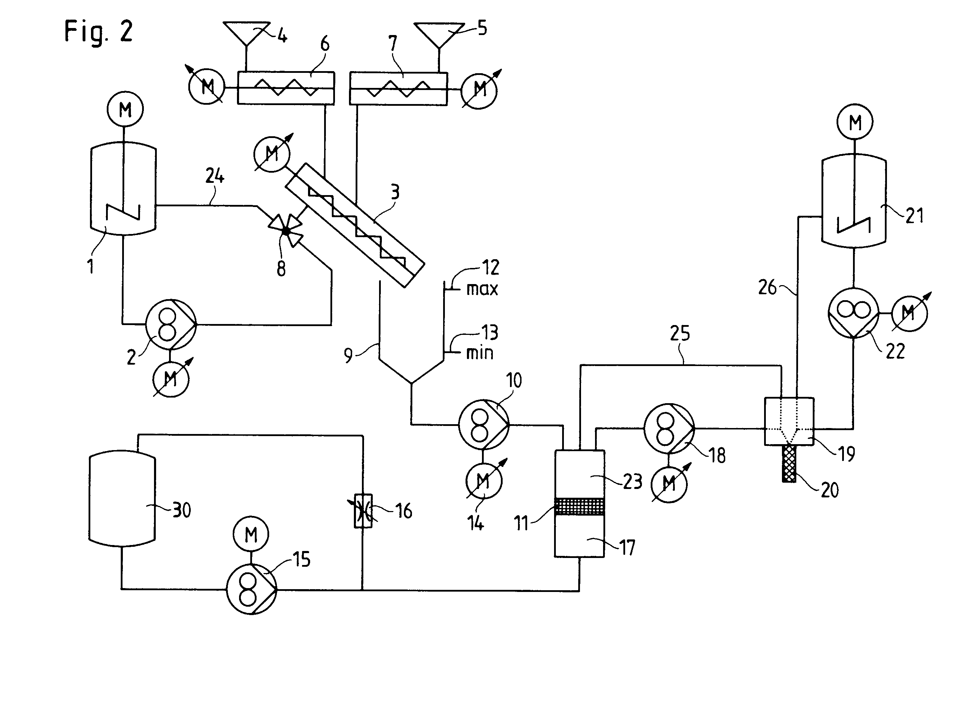

Figur 2 zeigt eine erfindungsgemäße Vorrichtung mit Kolbenspeicher 11 sowie Kreislaufführung der Reaktivkomponenten. Im Übrigen bezeichnen gleiche Bezugszeichen gleiche Elemente wie in Figur 1. Das Prepolymer wird aus dem Behälter 1 mittels Dosierpumpe 2 über das Ventil 8 in die Mischschnecke 3 gefördert. Im Falle von Betriebsunterbrechungen wird die Zufuhr über Ventil 8 der Mischschnecke 3 unterbrochen und das Prepolymer über die Rückführleitung 24 zum Behälter 1 zurückgeführt. Mahlgut wird aus dem Silo 4 und die Dosierschnecke 6 zur Mischschnecke geführt. Ferner kann aus dem Silo 5 mittels Dosierschnecke 7 zusätzlich ein Füllstoff zugeführt werden. Das Prepolymer-Mahlgut/Füllstoff-Gemisch wird aus Mischschnecke 3 in den Ansaugtrichter 9 gefördert und von dort weiter über die Dickstoffpumpe 10 in den Kolbenspeicher 11. Der Ansaugtrichter 9 ist mit einer Min/Max-Füllstandssensorik 12, 13 versehen, mittels derer die Dickstoffpumpe 10 gesteuert wird, so daß der Ansaugtrichter 9 weder überläuft noch leerläuft. Von der Primärseite 23 des Kolbenspeichers 11 wird das Gemisch mittels Förderpumpe 18 zum Mischkopf 19. geführt. Bei intermittierendem Betrieb nach Schußende (d.h. bei geschlossenem Ventil des Mischkopfes) wird das Gemisch über Rückführleitungen 25 zum Speicher 23 zurückgeführt. Auf der Sekundärseite 17 des Kolbenspeichers 11 wird mittels Zahnradpumpe 15 aus dem Behälter 30 eine Hydraulikflüssigkeit gefördert. Mittels Drosselventil 16 wird auf der Sekundärseite 17 ein konstanter Druck aufrecht erhalten. Aus dem Vorratsbehälter 21 wird über die Dosierpumpe 22 Vernetzer zum Mischkopfeingang 19 gefördert. Bei geschlossenem Mischkopfventil wird der Vernetzer über Rückführleitungen 26 zum Behälter 21 zurückgeführt. Das Primärvolumen 23 der Kolbenpumpe 11 ist so bemessen, daß bei intermittierender Betriebsweise des Statikmischers 20 das in der Mischschnecke 3 kontinuierlich zwischen zwei Schüssen erzeugte Gemisch aufgenommen werden kann. Während eines Schusses wird dann die Primärseite 23 wieder im wesentlichen entleert. Der im Mischer 3 kontinuierlich erzeugte Gemischstrom entspricht demgemäß der über die Zeit gemittelten diskontinuierlich dem Statikmischer zugeführten Gemischmenge.

## Patentansprüche

1. Verfahren zur Herstellung von gegebenenfalls zelligen Polyurethan-Formkörpern mit hohem Mahlgut/Füllstoff-Gehalt,
dadurch gekennzeichnet, daß
1. zuerst ein aromatisches Di- oder Polyisocyanat mit einer zur vollständigen Abreaktion aller NCO-Gruppen ungenügenden Menge eines Di- und/oder Polyols des Molekulargewichtes 1000 bis 20 000 vermischt und unter Bildung eines Isocyanat-Voradduktes mit dem NCO-Gruppengehalt von 5 bis 32 % zur Reaktion gebracht wird,
2. danach dieses Isocyanat-Voraddukt mit dem Mahlgut/Füllstoff vermischt wird, und
3. diese Mischung aus Isocyanat-Voraddukt und Mahlgut/Füllstoff in einem weiteren Schritt mit einer weiteren Menge eines Di-und/oder Polyols mit einem Molekulargewicht von 62 bis 2000 (Vernetzer) und gegebenenfalls mit Wasser und/oder organischem Treibmittel unter Verwendung eines statischen Mischorganes in eine Form eingetragen oder kontinuierlich zu Gußprofilen verarbeitet wird.

2. Verfahren nach Anspruch 1, dadurch gekennzeichnet, daß die Mischung aus Isocyanat-Voraddukt und Mahlgut/Füllstoff kontinuierlich erzeugt wird und die weitere Vermischung mit dem Vernetzer intermittierend zur Befüllung von Formen erfolgt, wobei zwischen zwei aufeinanderfolgenden Formbefüllungen vor der Vermischung mit dem Vernetzer eine Zwischenspeicherung der Isocyanat-Voraddukt-Mahlgut/Füllstoff-Mischung erfolgt.

3. Vorrichtung zur Herstellung von Polyurethan-Formkörpern mit hohem Mahlgut/Füllstoff-Gehalt, enthaltend ein Mischaggregat (3) mit calibrierten Zufuhrorganen (2, 6, 7) für ein Isocyanat-Prepolymer und Mahlgut/Füllstoff, ein Förderorgan (10) zur Förderung der in dem Mischaggregat (3) erzeugten Mischung zu einem unter konstantem Druck gehaltenen Kolbenspeicher (11), einen Mischkopf (19) mit Statikmischer (20) mit Zufuhrorganen (18, 22) für Prepolymer-Mahlgut/Füllstoff-Gemisch aus dem Kolbenspeicher (11) und Vernetzer aus einem Vorratsbehälter (21).
